## Europäisches Patentamt

(19) **European Patent Office**

**Office européen des brevets**

(11) Numéro de publication: **0 262 058**
**B1**

---

(12) **FASCICULE DE BREVET EUROPEEN**

---

(45) Date de publication du fascicule du brevet:
**25.10.89**

(51) Int. Cl.⁴: **B01F 3/04**, F27D 23/04

(21) Numéro de dépôt: **87420245.0**

(22) Date de dépôt: **18.09.87**

---

(54) Dispositif rotatif à pales de mise en solution d'éléments d'alliage et de dispersion de gaz dans un bain d'aluminium.

---

(30) Priorité: **22.09.86 FR 8613362**

(43) Date de publication de la demande:
**30.03.88 Bulletin 88/13**

(45) Mention de la délivrance du brevet:
**25.10.89 Bulletin 89/43**

(84) Etats contractants désignés:
**AT BE CH DE ES GB GR IT LI LU NL SE**

(56) Documents cités:
**EP-A- 0 073 729**
**US-A- 1 579 355**
**US-A- 3 227 547**

(73) Titulaire: **ALUMINIUM PECHINEY, 23, rue Balzac,
F-75008 Paris Cédex 08(FR)**

(72) Inventeur: **Hudault, Gérard, 348 Boulevard de la Paix,
F-64000 Pau(FR)**
Inventeur: **Netter, Pierre, 2 Rue Soffrey-Calignon,
F-38500 Voiron(FR)**

(74) Mandataire: **Vanlaer, Marcel et al, PECHINEY 28, rue de
Bonnel, F-69433 Lyon Cédex 3(FR)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est relative à un dispositif rotatif à pales de mise en solution d'éléments d'alliage et de dispersion de gaz dans un bain d'aluminium contenu dans un récipient.

L'homme de l'art sait que les produits fabriqués avec de l'aluminium pur ne possèdent généralement pas les caractéristiques mécaniques convenables à de nombreuses utilisations et que, pour les leur conférer il faut le plus souvent allier cet aluminium à d'autres éléments tels que le silicium, le magnésium, le fer, le mangenèse, etc...

Ces alliages sont généralement obtenus en incorporant ces éléments sous forme massive ou de particules solides dans un bain d'aluminium et en les dispersant le mieux possible à l'aide de dispositifs particuliers de manière qu'ils se dissolvent le plus rapidement possible.

Or, actuellement dans toutes les installations industrielles, ces éléments sont introduits dans les fours de fonderie, ce qui a pour inconvénient:
- de conduire dans certaines parties du four à la formation de zones d'accummulation et d'agglomération des particules dont la dissolution demande un temps relativement long;
- de nécessiter des dispositifs de brassage très lourds et très coûteux dans le cas de fours de grande capacité;
- de consommer beaucoup d'énergie.

En outre, ces dispositifs ont uniquement pour fonction de disperser des solides dans un liquide.

Or, l'homme de l'art de la fonderie se trouve non seulement confronté à un problème de fabrication d'alliage, mais, également à celui de se débarrasser de certaines impuretés contenues dans le métal telles que les métaux alcalins et alcalino-terreux qui ont des effets nocifs sur l'alliage produit comme celui d'augmenter la vitesse d'oxydation du métal fondu ou de fragiliser à chaud les pièces qui en sont issues.

Pour éliminer ces alcalins, on recourt généralement soit à un traitement par un flux contenant par exemple des fluorures alcalins, soit à un traitement par un gaz chloré. Dans ce dernier cas, pour que le traitement soit valable, il faut que l'on dispose de moyens de dispersion de gaz dans un métal liquide suffisamment efficaces. Certes, ici encore, l'homme de l'art n'est pas resté inactif et a mis au point des disperseurs de gaz qui conviennent. On peut citer en particulier celui décrit dans le brevet français n° 2 512 067.

Mais, l'homme de l'art de la fonderie cherche également à débarasser les bains de métal fondu des gaz qu'ils contiennent. Ainsi, l'US-A 3 227 547 propose un procédé dans lequel on utilise un dispositif qui suivant la figure 14 comprend un arbre percé suivant son axe par un canal destiné au passage d'un gaz dont une extrémité est reliée à une source de gaz et à un moteur d'entraînement, l'autre extrémité comportant un disque de même axe que l'arbre et qui est muni sur sa paroi latérale de pales faiblement inclinées par rapport à la verticale qui s'allongent suivant les génératrices d'un prisme droit de section parallèlogrammatique d'axe passant par le centre du disque, dont les extrémités résultant de l'intersection dudit prisme avec un cylindre de même axe que celui s'appuyant sur les parois latérales du disque et dont les petites faces sont situées dans les plans des faces supérieure et inférieure du disque. Ce disque est percé au centre par une ouverture qui met en communication le canal distributeur de gaz avec le bain et muni sur sa face inférieure d'échancrures radiales par lesquelles s'écoulent les gaz vers des ouvertures placées sur sa paroi latérale et situées entre les pales. Il est à noter qui suivant le sens de rotation du disque, les pales ont leur face avant dirigée vers le bas.

Mais tous ces moyens spécifiques de la fonction pour laquelle ils ont été conçus c'est-à-dire d'assurer un bon échange liquide-gaz et ne peuvent généralement pas être utilisés comme dispositifs de mise en solution d'éléments d'alliages, de sorte que pour exercer les deux fonctions: dissolution de solides plus ou moins denses et dispersion de gaz dans un métal liquide, l'homme de l'art est obligé de faire appel à deux types de dispositifs et donc à deux stades de traitement, ce qui prolonge d'autant le temps nécessaire à leur application.

C'est pourquoi la demanderesse a essayé de trouver un moyen qui permette d'assurer simultanément les deux fonctions suivant des conditions d'exploitation intéressantes.

Ce moyen est un dispositif rotatif de mise en solution d'éléments d'alliage et de dispersion de gaz dans un bain d'aluminium provenant notamment d'un prélèvement direct d'une cuve d'électrolyse contenu dans un récipient, tel qu'une poche de transport, comprenant un arbre percé suivant son axe par un canal destiné au passage du gaz, relié à une première extrémité à une source de gaz et à un moteur d'entraînement et comportant à sa deuxième extrémité destinée à être immergée dans le bain un disque de même axe que l'arbre, et qui est muni sur sa paroi latérale de pales qui s'allongent suivant les génératrices d'un prisme droit de section parallélogrammatique d'axe passant par le centre du disque, dont les extrémités résultent de l'intersection dudit prisme avec un cylindre de même axe que celui s'appuyant sur la paroi latérale du disque, et dont les petites faces (6) sont situées dans les plans des faces supérieure et inférieure du disque, caractérisé en ce que les grandes faces des pales forment un angle alpha d'au plus 45 degrés avec un plan perpendiculaire à l'arbre (I), que suivant le sens de rotation du disque, les grandes faces des pales situes du côté de ladite première extrémité du canal (2) se trouvent en amont des grandes faces situées du côté de ladite deuxième extrémité du canal (2) et que lesdites pales sont pourvues à leur extrémité d'au moins un orifice reliée au canal par un passage tubulaire.

Ainsi, la demanderesse s'est-elle inspirée du dispositif décrit dans l'US-A 3 227 547. Mais elle y a ajouté trois éléments nouveaux.

En effet, il n'est pas facile de mélanger un liquide à la fois à des produits de faible masse volumique comme les gaz qui ont tendance à s'élever rapidement et à s'échapper à l'atmosphère et à des métaux qui au contraire tombent rapidement au fond du bain et s'agglomèrent en un monticule dont la dissolution complète peut s'avérer impossible en raison d'échanges liquide-solide pratiquement nuls.

C'est pourquoi la demanderesse a supplé aux lacunes du dispositif de l'art antérieur en matière de mélange de produits de masse volumique élevée en donnant aux pales un angle par rapport à l'horizontale relativement petit contrairement à l'autre conception dans laquelle les pales ont un angle beaucoup plus grand et présentent donc une surface d'attaque du bain beaucoup plus grande et par suite exigent pour leur mise en mouvement une quantité d'énergie plus élevée.

De plus, l'inclinaison des pales a été inversée de manière à permettre aux éléments d'alliage d'acquérir un mouvement ascendant dans le bain.

Enfin, l'admission de gaz dans le bain a été réalisée à l'extrémité des pales, là où la vitesse périphérique est la plus grande et où le «cassage» des bulles et leur dispersion dans le bain s'effectue le mieux.

Un tel moyen permet de réaliser des conditions particulières de marche favorable au but recherché, à savoir:

– mise en mouvement du bain généralisée à toute la poche, ce qui permet d'augmenter la vitesse de dissolution des éléments d'alliage et d'assurer une meilleure diffusion du gaz pour éliminer les alcalins;

– brusques variations de vitesse des veines fluides qui provoquent un déplacement relatif des grains de métaux en suspension par rapport au liquide;

- l'absence de tourbillons en surface qui sont la source d'une oxydation du bain;

- une fine dissémination des bulles gazeuses qui empêche leur remontée trop rapide à la surface du bain;

- une vitesse de rotation relativement faible et en tout cas convenable pour éviter l'usure du rotor.

Avec un tel dispositif équipé de passages tubulaires radiaux de diamètre compris entre 2 et 5 mm alimentés en gaz inerte contenant quelques pourcents en volume de chlore sous une pression comprise entre 0,1 et 0,3 MPa, tournant à une vitesse comprise entre 100 et 350 tours/minute, un disque ayant un diamètre correspondant entre le ¼ et le 1/3 du diamètre du récipient et placé à une distance du fond du récipient comprise entre le 1/3 et le 1/4 de la hauteur du bain, on a obtenu une grande vitesse de dissolution des éléments d'alliages utilisés habituellement dans la métallurgie de l'aluminium ainsi qu'une bonne élimination des éléments alcalins tels que le sodium et le lithium.

On parvient cependant à un optimum des résultats quand, de préférence, certaines caractéristiques complémentaires sont utilisées dans la conception du disque. Ce sont :

- le nombre de pales compris entre 4 et 8,

- la longueur de l'axe de chaque pale voisine du rayon du disque,

- l'épaisseur e de chaque pale comprise entre le 1/4 et les 3/4 de la hauteur du disque,

- la largeur de chaque pale comprise entre le 1/5 et les 4/5 du diamètre du disque,

- un angle $\alpha$ compris entre 10 et 20 degrés,

- un sens de rotation du disque tel que dans ce sens les grandes faces inférieures des pales se trouvent en amont des faces supérieures,

- les orifices d'amenée de gaz au bain disposés aux extrémités des axes des pales,

- un rapport diamètre sur hauteur du disque compris entre 12 et 5.

L'invention sera mieux comprise à l'aide des figures jointes qui représentent:

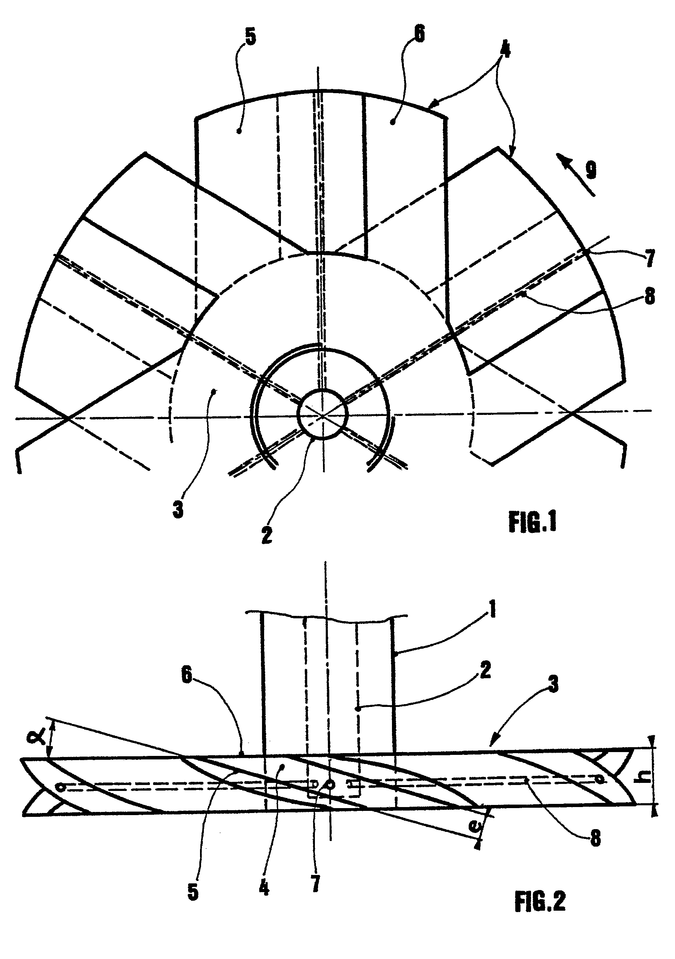

. Figure 1 : une vue de dessus du rotor.

. Figure 2 : une vue de côté du rotor.

Sur la figure 1, on distingue un disque (3) tournant dans le sens (9) muni de pales (4) qui présentent une grande face (5) et une petite face (6). A l'extrémité de leurs axes se trouvent des orifices (7) en liaison avec le canal (2) par l'intermédiaire des passages tubulaires (8).

Sur la figure 2 sont représentés l'arbre (1) percé par un canal (2) comportant à sa partie inférieure un disque (3) de hauteur h muni de pales (4) d'épaisseur e formant un angle $\alpha$ avec l'horizontale et de section parallélogrammatique constituée par les grandes faces (5) et les petites faces (6) qui affleurent les plans supérieur et inférieur du disque. A l'extrémité de l'axe d'une des pales figure l'orifice (7) d'admission de gaz.

En fonctionnement, le disque qui plonge dans le bain d'aluminium est entraîné par un moteur, non représenté, dans le sens de la flèche et du gaz est admis par une source non représentée dans le canal (2) tandis que les éléments d'alliages s'échappent d'une trémie placée au-dessus du bain à proximité de l'arbre. Sous l'action conjuguée du brassage imposé par le profil et l'orientation particuliers des pales et de l'action du gaz distribué par l'extrémité des pales, il en résulte une mise en solution rapide des éléments d'alliage et une élimination des impuretés alcalines.

L'invention peut être illustrée à l'aide des exemples d'application suivants :

On a procédé à plusieurs essais de dissolution d'éléments d'alliages et d'élimination simultanées d'alcalins dans des bains d'aluminium issus de cuves d'électrolyse et contenus dans des poches.

Les conditions générales étaient les suivantes :

- poche sensiblement cylindrique de dimensions : hauteur 1,60m, diamètre 1,70 m

- hauteur du bain dans la poche comprise entre 1,05 m et 1,30 m
- dispositif suivant l'invention placé dans l'axe de la poche avec un disque de diamètre 0,70 m de hauteur 0,06 m muni de 6 pales inclinées à 16 degrés
- alimentation en éléments d'alliage par une trémie placée au-dessus du bain à 0,40 m de l'arbre. Les conditions particulières de l'essai et les résultats figurent dans le tableau ci-après :

Dissolution

| Essai | Bain d'Al | | | Dispositif | | Masse d'éléments d'alliages ajoutés en kg | | | | | Durée de l. dissolution en min. |
|---|---|---|---|---|---|---|---|---|---|---|---|
| | Température en °C | | Masse en kg | Vitesse rotation en T/min. | hauteur du disque au-dessus du fond de la poche en m | Fe/Si | Ac 90* | Mg | Mn | Cu | |
| | Début | Fin | | | | | | | | | |
| 1 | 825 | 759 | 5860 | 195 | 500 | | 40 | 160 | 10 | | 6 |
| 2 | 830 | 770 | 5560 | 215 | 500 | | | | 180 | 33 | 9 |
| 3 | 842 | 806 | 4780 | 230 | 550 | 17 | | 52 | 56 | 5 | 7 |
| 4 | 824 | 758 | 5840 | 220 | 450 | | | 224 | 72 | | 6 |

\* AC 90 alliage mère de chrome contenant 90% en poids de chrome. A noter que tous les éléments étaient ajoutés sous forme de poudre de granulométrie comprise entre 0,25 et 3 mm sauf le magnésium mis sous forme de lingots de 7 kg et le cuivre en copeaux.

Elimination des alcalins

| Essai | Débuts gaz utilisés en N 1/h | | Teneur initiale en ppm | | Teneur finale en ppm | | Durée en min. |
|---|---|---|---|---|---|---|---|
| | Ar | Cl2 | Na | Li | Na | Li | |
| 1 | 10.000 | 900 | 38 | 22 | 2 | 3 | 10 |
| 2 | 10.000 | 200 | 25 | 22 | 1,5 | 2 | 10 |
| 3 | 10.000 | 600 | 18 | 8 | 0,5 | 0,5 | 10 |
| 4 | 8.000 | 900 | 30 | 7 | 1,5 | 1 | 10 |

On constate qu'en moins de 10 minutes, on obtient une dissolution quasi totale de la plupart des éléments d'addition classiques de l'aluminium et que simultanément la teneur en Na et en Li peut être abaissée en moins de 10 minutes au voisinage de 3 ppm.

L'invention trouve son application notamment dans l'élaboration rapide d'alliages d'aluminium à basse teneur en alcalins.

**Revendications**

1. Dispositif rotatif à pales de mise en solution d'éléments d'alliage et de dispersion de gaz dans un bain d'aluminium provenant notamment d'un prélèvement d'une cuve d'électrolyse contenu dans un récipient, tel qu'une poche de transport, comprenant un arbre (1) percé suivant son axe par un canal (2) destiné au passage du gaz, relié à une première extrémité à une source de gaz et à un moteur d'entraînement et comportant à sa deuxième extrémité destinée à être immergée dans le bain un disque (3) de même axe que l'arbre et qui est muni sur sa paroi latérale de pales (4) qui s'allongent suivant les génératrices d'un prisme droit de section parallélogrammatique d'axe passant par le centre du disque dont les extrémités résultent de l'intersection dudit prisme avec un cylindre de même axe que celui s'appuyant sur la paroi latérale du disque, et dont les petites faces (6) sont situées dans les plans des faces supérieure et inférieure du disque, caractérisé en ce que les grandes faces (5) des pales forment un angle α d'au plus 45 degrés avec un plan perpendiculaire à l'arbre (1), que suivant le sens de rotation du disque, les grandes faces des pales situées du côté de ladite première extrémité du canal (2) se trouvent en amont des grandes faces des pales situées du côté de ladite deuxième extrémité du canal (2) et en ce que lesdites pales sont pourvues à leur extrémité d'au moins un orifice (7) relié au canal (2) par un passage tubulaire (8).

2. Dispositif suivant la revendication 1, caractérisé en ce que le nombre de pales est compris entre 4 et 8.

3. Dispositif selon la revendication 1, caractérisé en ce que chaque pale a un axe de longueur voisine du rayon du disque.

4. Dispositif selon la revendication 1, caractérisé en ce que chaque pale a une épaisseur e comprise entre le 1/4 et les 3/4 de la hauteur du disque.

5. Dispositif selon la revendication 1, caractérisé en ce que chaque pale a une largeur comprise entre le 1/5 et les 4/5 du diamètre du disque.

6. Dispositif selon la revendication 1, caractérisé en ce que α est compris entre 10 et 20 degrés.

7. Dispositif selon la revendication 1, caractérisé en ce que le rapport diamètre sur hauteur du disque est compris entre 12 et 5.

## Patentansprüche

1. Drehvorrichtung mit Blättern zum Auflösen von Legierungselementen und zur Dispersion von Gas in einem Aluminiumbad, das insbesondere von einer Entnahme aus einer Elektrolysewanne kommt, enthalten in einem Behälter, wie z.B. einer Transportpfanne, mit einer Welle (1), die längs ihrer Achse von einem zum Durchlaß des Gases bestimmten Kanal (2) durchsetzt ist, an einem ersten Ende mit einer Gasquelle und einem Antriebsmotor verbunden ist und an ihrem zweiten, zum Eintauchen in das Bad bestimmten Ende eine Scheibe (3) derselben Achse wie die Welle und an ihrer Seitenwand mit Blättern (4) ausgerüstet aufweist, die sich längs der Mantellinien eines geraden Prismas von Parallelogrammquerschnitt mit einer durch das Zentrum der Scheibe laufenden Achse erstrecken, deren Enden sich aus dem Schneiden des Prismas mit einem Zylinder gleicher Achse wie des sich an die Seitenwand der Scheibe anlehnenden ergeben und deren kleine Flächen (6) in den Ebenen der Ober- und Unterseite der Scheibe liegen, dadurch gekennzeichnet, daß die großen Flächen (5) der Blätter einen Winkel α von höchstens 45° mit einer zur Welle (1) senkrechten Ebene bilden, daß längs der Drehrichtung der Scheibe die an der Seite des ersten Endes des Kanals (2) liegenden großen Flächen der Blätter sich stromauf der an der Seite des zweiten Endes des Kanals (2) liegenden großen Flächen der Blätter befinden und daß die Blätter an ihrem Ende mit wenigstens einer Öffnung (7) versehen sind, die mit dem Kanal (2) durch einen rohrförmigen Kanal (8) verbunden ist.

2. Vorrichtung nach dem Anspruch 1, dadurch gekennzeichnet, daß die Zahl der Blätter 4 bis 8 beträgt.

3. Vorrichtung nach dem Anspruch 1, dadurch gekennzeichnet, daß jedes Blatt eine Achse einer dem Radius der Scheibe nahen Länge hat.

4. Vorrichtung nach dem Anspruch 1, dadurch gekennzeichnet, daß jedes Blatt eine Dicke e im Bereich von 1/4 bis 3/4 der Höhe der Scheibe hat.

5. Vorrichtung nach dem Anspruch 1, dadurch gekennzeichnet, daß jedes Blatt eine Breite im Bereich von 1/5 bis 4/5 des Durchmessers der Scheibe hat.

6. Vorrichtung nach dem Anspruch 1, dadurch gekennzeichnet, daß α im Bereich von 10 bis 20° ist.

7. Vorrichtung nach dem Anspruch 1, dadurch gekennzeichnet, daß das Verhältnis von Durchmesser zu Höhe der Scheibe im Bereich von 12 bis 5 ist.

## Claims

1. A rotary blade-type apparatus for dissolving alloy elements and dispersing gas in an aluminium bath coming in particular from tapping an electrolysis tank, contained in a container such as a transportation ladle, comprising shaft (1) which is pierced along its axis by a duct (2) intended for the passage of the gas, connected at a first end to a source of gas and to a drive motor and comprising at its second end intended for being immersed in the bath a disc (3) with the same axis as the shaft and which is provided on its side wall with blades (4) which extend along the generatrices of a right prism of parallelogrammatic section with its axis passing through the centre of the disc, the ends of which result from the intersection of said prism with a cylinder of the same axis as that bearing against the side wall of the disc, the small faces (6) of the blades being disposed respectively in the planes of the upper and lower faces of the disc, characterised in that the large faces (5) of the blades are forming an angle α of at most 45 degrees to a plane perpendicular to the shaft (1), that following the direction of rotation of the disc the large faces of the blades disposed on the side of the said first end of the duct (2) are disposed upstream of the large faces of the blades disposed on the side of the said second end of the duct (2) and in that the said blades are provided with at least one orifice (7) connected to the duct (2) by a tubular passage (8).

2. Apparatus according to claim 1 characterised in that the number of blades is between 4 and 8.

3. Apparatus according to claim 1 characterised in that each blade has an axis of a length with is close to the radius of the disc.

4. Apparatus according to claim 1 characterised in that each blade is of a thickness e of between one quarter and three quarters of the height of the disc.

5. Apparatus according to claim 1 characterised in that each blade is of a width of between one fifth and four fifths of the diameter of the disc.

6. Apparatus according to claim 1 characterised in that α is between 10 and 20 degrees.

7. Apparatus according to claim 1 characterised in that the ratio of diameter to height of the disc is between 12 and 5.

**FIG.1**

**FIG.2**